Europäisches Patentamt

European Patent Office

Office européen des brevets

(11) Veröffentlichungsnummer: **0 253 980**
**A1**

## (12) EUROPÄISCHE PATENTANMELDUNG

(21) Anmeldenummer: 87107129.6

(22) Anmeldetag: 16.05.87

(51) Int. Cl.³: **B 01 D 53/34**
**B 05 B 15/12**

(30) Priorität: 12.07.86 DE 3623607

(43) Veröffentlichungstag der Anmeldung:
27.01.88 Patentblatt 88/4

(84) Benannte Vertragsstaaten:
AT BE CH DE ES FR GB IT LI LU NL SE

(71) Anmelder: BASF Lacke + Farben Aktiengesellschaft
Max-Winkelmann-Strasse 80
D-4400 Münster(DE)

(71) Anmelder: L + K, Luft- Klimaanlagenbau GmbH
Fuggerstrasse 13
D-4400 Münster(DE)

(72) Erfinder: Horn, Hans Christoph, Dr. Dipl.-Chem.
Amselweg 13
D-5042 Erfstadt-Lechenich(DE)

(72) Erfinder: Meisner, Roland Andreas, Dipl.-Ing.
Siebenstücken 39
D-4403 Senden(DE)

(72) Erfinder: Kondermann, Dieter Hans, Dipl.-Ing.
Linckensstrasse 117
D-4400 Münster(DE)

(72) Erfinder: Wiebracht, Herbert
Sepp-Herberger-Strasse 20
D-4405 Nottuln(DE)

(74) Vertreter: Habbel, Hans-Georg, Dipl.-Ing.
Postfach 3429 Am Kanonengraben 11
D-4400 Münster(DE)

(54) Verfahren und Vorrichtung zum Reinigen der Abluft einer manuell betriebenen Spritzkabine.

(57) Die Erfindung bezieht sich auf ein Verfahren zum Reinigen der Abluft einer manuell betriebenen Spritzkabine, wobei die Frischluft ständig einem Arbeitsraum (2) zugeführt wird, die Abluft aus einem Spritzraum (3) abgesaugt und in den Spritzraum rezirkuliert wird und nach entsprechender Aufpegelung ihres Lösungsmittelgehaltes einer Abluftreinigung zugeführt und im Grenzbereich zwischen Arbeitsraum und Spritzraum ein Luftschleier aus Abluft erzeugt wird, der eine atmosphärische Trennung zwischen Arbeitsraum und Spritzraum bewirkt.

EP 0 253 980 A1

./...

Fig. 1

- 1 -

**"Verfahren und Vorrichtung zum Reinigen der Abluft einer manuell betriebenen Spritzkabine"**

Die Erfindung bezieht sich auf ein Verfahren zum Reinigen der Abluft einer manuell betriebenen Spritzkabine gemäß dem Oberbegriff des Hauptanspruches und eine Vorrichtung zur Durchführung des Verfahrens gemäß dem Oberbegriff des Anspruches 5.

Die Reinigung und damit Beherrschung der Abluft aus nicht manuell betriebenen Spritzanlagen für lösungsmittelhaltige Farbaufträge ist heute bekannt und bereitet deshalb keine Schwierigkeiten, da die Abluft aus derartigen Anlagen mit Lösungsmitteln so hoch aufgepegelt werden kann, daß eine wirtschaftliche und sinnvolle Abluftreinigung möglich wird, wodurch die die Umwelt belastenden Lösungsmittel beseitigt werden.

Bei manuell betriebenen Spritzkabinen sind diese bei nicht manuell betriebenen Spritzanlagen bekannten Arbeitsweisen nicht einsetzbar, da die Belastung des sich in der Spritzkabine befindenden Menschen durch aufgepegelte Umluft zu hoch wird. Bisher wird daher aus derartigen manuell betriebenen Spritzkabinen die lösungsmittelhaltige Abluft in die Umgebungsluft ab-

- 2 -

gegeben, wobei man bestrebt ist, durch möglichst hohe Frischluftzugabe die Lösungsmittelkonzentration der Abluft in der Umgebungsluft zu senken.

Diese Arbeitsweise stellt aber einerseits eine nicht vertretbare Belastung der Umwelt, andererseits eine Energieverschwendung dar.

Bereits aus der DE-C-649 266 ist eine Spritzanlage mit Absaugung der Farbnebel bekannt, bei welcher der Farbnebel aus dem Spritzraum bei Zuführung von Frischluft abgesaugt wird, so daß der Arbeitsraum oberhalb des Arbeitstisches vorn und auf den Seiten wandartig durch Luftschleier abgeschlossen ist, welche aber das Einführen der Hände und Arme des Arbeiters von außen in den Arbeitsraum hinein nicht behindern.

Aus der gattungsbildenden DE-A-33 14 590 ist ein Verfahren zum Ventilieren einer Flächenbehandlungsanlage bekannt, bei welcher der erzeugte Luftschleier ebenfalls durch Frischluft gebildet wird. In den eigentlichen Spritzraum wird teilweise gereinigte und aufbereitete Umluft eingeführt, wobei das Reinigen der Umluft in einem Naßabscheider erfolgt. Die Aufbereitung der rezirkulierten Luft erfolgt in einem Wärmetauscher und einer Luftkonditioniervorrichtung. Der Betrieb dieser bekannten Anlage ist energieaufwendig und das für eine sinnvolle Abluftreinigung erforderliche Aufpegeln der Abluft erfolgt nicht, sondern die in die Spritzkabine zurückgeführte Umluft wird vor ihrer Einführung in die Spritzkabine bereits zumindest teilweise aufbereitet.

- 3 -

Der Aufwand für das Erzeugen des Luftschleiers durch Zuführen von Frischluft als Luftschleier ist sehr hoch.

Der Erfindung liegt die Aufgabe zugrunde, ein Verfahren zu schaffen, mit dem auch die Abluft aus manuell betriebenen Spritzkabinen in wirtschaftlicher Weise einer Abluftreinigung zugeführt werden kann und trotzdem der sich in der Spritzkabine befindende Mensch einer lösungsmittelfreien Umgebungsluft ausgesetzt ist.

Diese der Erfindung zugrundeliegende Aufgabe wird durch die Lehre des Hauptanspruches gelöst.

Vorteilhafte Ausgestaltungen der Verfahrensweise gemäß dem Hauptanspruch sind in den Unteransprüchen 2 bis 4 erläutert.

Gemäß der Erfindung wird also so vorgegangen, daß die Be- und Entlüftung einer manuell betriebenen Spritzkabine in zwei Gasströme aufgeteilt wird. Der erste Gasstrom dient der Zuführung von lösungsmittelfreier Frischluft, und zwar in den Arbeitsraum der Spritzkabine. Der zweite Gasstrom rezirkuliert die im Spritzraum entstehende lösungsmittelhaltige Luft so lange, bis hier eine ausreichende Aufpegelung der aus der Spritzkabine austretenden Umluft aufgetreten ist, so daß dann diese aufgepegelte Luft sinnvoll einer Abluftreinigung, z.B. einer thermischen Nachverbrennung zugeführt werden kann. Als Abluftreinigung kann eine thermische Abluftreinigung, ein Auskondensieren, ein Absorbieren oder eine Adsorption eingesetzt werden.

Der zweite Gasstrom dient auch zur Erzeugung eines Luftschleiers zwischen dem Arbeitsraum und dem Spritzraum, um damit eine atmosphärische Trennung zwischen der im Arbeitsraum befindlichen Frischluft und der im Spritzraum befindlichen lösungsmittelhaltigen Umluft zu erreichen. Die Erzeugung dieses Luftschleiers erfolgt durch ständige Rezirkulation, indem im Bodenbereich, und zwar im Grenzbereich zwischen Arbeitsraum und Spritzraum, mit Lösungsmittel beladene Luft abgezogen und unter Druck im Deckenbereich, und zwar auch hier im Grenzbereich zwischen Spritzraum und Arbeitsraum wieder eingeführt wird. Aufgrund der Injektionswirkung des Luftschleiers und der daraus resultierenden Ansaugung der Raumluft aus dem Arbeitsraum, wird eine saubere Trennung zwischen Spritzraum und Arbeitsraum geschaffen und in diesem Bereich ein Luftschleier erzeugt, der aus einer Mischung aus Frischluft und aufgepegelter Umluft besteht. Der Aufwand zur Erzeugung des Luftschleiers ist also gering.

In überraschender Weise hat sich gezeigt, daß es problemlos möglich ist, durch diesen Luftschleier hindurch die Spritzarbeiten im Spritzraum durchzuführen, wobei sich der Arbeiter in einem frischluftdurchströmten Arbeitsraum befindet, sein Arbeitswerkzeug aber in einem eine hohe Lösungsmittelkonzentration aufweisenden Spritzraum, wobei ein Übertritt von lösungsmittelhaltiger Luft aus dem Spritzraum in den Arbeitsraum nicht eintritt. Durch den Einsatz einer im unteren Bereich des Luftschleiers vorgesehenen zusätzlichen Düse, die ebenfalls mit Umluft betrieben werden kann, wird erreicht, daß der Luftschleier nach unten und innen gezogen wird, also es wird verhindert, daß der Luftschleier in den Arbeitsraum austreten kann und außerdem wird eine Stabilisierung des gesamten Luftschleiers dadurch erreicht.

Wird - wie dies gemäß der Erfindung vorgeschlagen wird - im rückwärtigen Bereich des Spritzraumes durch einen Bypaßstrom ein zusätzlicher Wandluftschleier erzeugt, erfolgt hier ein Abführen der die Höchstbelastung mit Lösungsmittel aufweisenden Luft, wobei über entsprechende Meßdüsen in der Abluftabführungsleitung nunmehr die Abgabe der mit Lösungsmitteln beladenen Luft so gesteuert werden kann, daß nur - wenn eine ausreichende Aufpegelung der Abluft erreicht ist - dieses Abgas einer Abluftreinigung, z.B. einer Nachverbrennung, zugeführt wird.

Die Vorrichtung zur Durchführung des erfindungsgemäßen Verfahrens ist im Unteranspruch 5 erläutert und vorteilhafte Ausgestaltungen dieser Vorrichtung sind in den Unteransprüchen 7 bis 11 näher definiert.

Ein Ausführungsbeispiel der Erfindung wird nachfolgend anhand der Zeichnungen erläutert. Die Zeichnungen zeigen dabei in

Fig. 1          schematisch eine Seitenansicht auf
                eine erfindungsgemäß ausgebildete
                Spritzkabine und in

Fig. 2          eine Ansicht in Richtung aus dem Arbeitsraum zum Spritzraum.

In den Zeichnungen ist mit 1 eine Spritzkabine bezeichnet, die einen Arbeitsraum 2 und einen Spritzraum 3 besitzt. Im Spritzraum 3 ist ein Arbeitstisch 4 vorgesehen, auf dem bei dem dargestellten Ausführungsbeispiel ein zu behandelndes Werkstück 5 aufgestellt ist. Der Arbeitstisch ist gasdurchlässig und beispielsweise mit einer Filtermatte 6 ausgerüstet, die der Abfilterung von Feststoffpartikelchen dient.

An die Spritzkabine schließt im Bereich des Arbeitsraumes 2 eine Frischluftzuführungsleitung 7 an, in die ein entsprechendes Gebläse 8 eingeschaltet ist. Die Mündung der Frischluftzuführungsleitung 7 in den Arbeitsraum 2 kann durch Filter 9 geschützt werden, so daß sichergestellt wird, daß nur staubfreie, gereinigte Frischluft gleichmäßig verteilt in den Arbeitsraum 2 eingeführt wird.

In dem durch den Arbeitstisch 4 und den Boden der Spritzkabine 1 gebildeten Raum mündet eine Umluftabführungsleitung 15, in die ein Gebläse 16 eingeschaltet ist. Dieses Gebläse 16 saugt die mit Lösungsmittel beladene Luft in diesem Bereich ab und führt diese Luft, wie bei 17 erkennbar ist, wieder in den Spritzraum 3 ein, wobei auch hier entsprechende Filterelemente 18 eingeschaltet sein können. An die Umluftabführungsleitung 15 schließt eine Bypaßleitung 19 an, die im Rückwand- und Seitenbereich der Spritzkabine 1 über eine entsprechende Düsenanordnung mündet und einen Wandschleier z.B. vor der Rückwand erzeugt, der die lösungsmittelbeladene Luft aus dem Spritzraum 3 aufnimmt, wobei hier die höchst Lösungsmittelkonzentration vorhanden ist.

In die Bypaßleitung 19 eingeschaltet ist eine Abluftleitung 20, die zu einer Abluftreinigung, z.B.

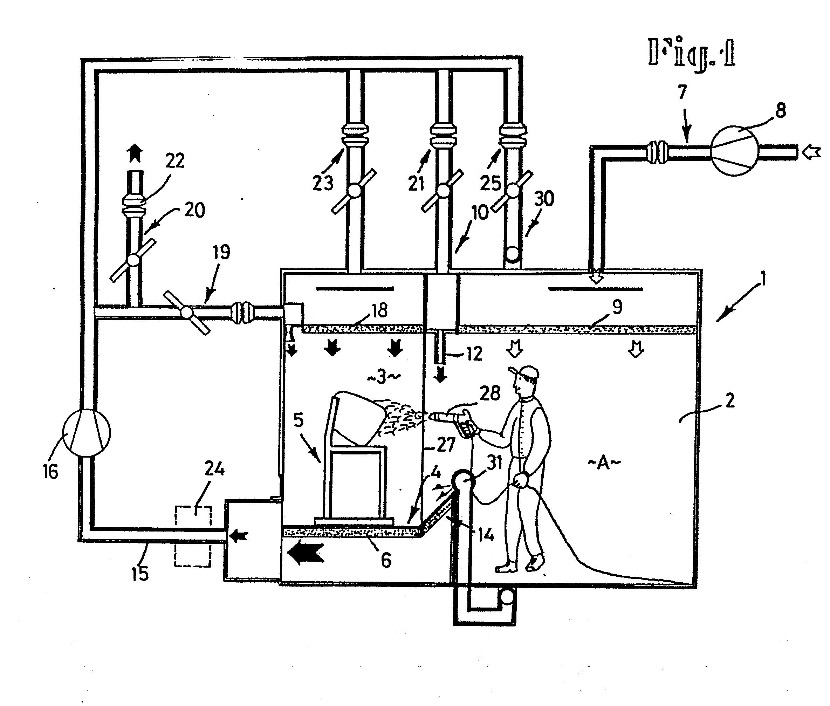

einer thermischen Nachverbrennung, führt. An die Umluftabführungsleitung 15 schließt eine Zirkulationsleitung 10 an, die im Deckenbereich der Spritzkabine 1 Luft unter Druck abgibt, wobei die Luft über ein Rechteckrohrsystem 12 abgegeben wird, das sich über die ganze Breite der Spritzkabine erstreckt und somit einen recht scharfstrahligen Luftschleier erzeugt, der aus dem Rechteckrohrsystem 12 austretend von der Umluftabführungsleitung 15 im Bodenbereich der Spritzkabine 1 angesaugt wird. Im Bereich dieses Luftschleiers ist - wie dies die Fig. 1 deutlich zeigt - der Arbeitstisch 4 bei 14 hochgezogen. Hierdurch wird die Trennung zwischen Spritzraum 3 und Arbeitsraum 2 noch verbessert.

Wie aus der Darstellung ersichtlich, können Meßeinrichtungen 21, 22, 23 und 25 in die Zirkulationsleitung 10, in die Abluftleitung 20, in die Umluftabführungsleitung 15 und in eine Bypaßleitung 30 eingeschaltet sein. Hierdurch ist eine Steuerung der jeweils zur Abluftreinigung abzugebenden, stark aufgepegelten Umluft möglich.

Zusätzlich können weitere Feststoffilter, z.B. 24, eingeschaltet sein, wie dies gestrichelt in Fig. 1 dargestellt ist.

Weiterhin schließt an die Umluftabführungsleitung 15 eine Bypaßleitung 30 an, die zu einer Spaltdüse 31 führt. Diese Spaltdüse 31 ist im Bereich der hochgezogenen Kante 14 des Arbeitstisches 4 so angeordnet, daß die Düse aufgepegelte Umluft vom Arbeitsraum 2 her auf die Unterkante des durch das Rechteckrohrsystem 12 geschaffenen Luftschleiers richtet, so daß dieser Luftschleier in seinem unteren Bereich ver-

- 8 -

stärkt, beschleunigt und angezogen wird, d.h. insgesamt stabilisiert wird, wodurch ein Übertreten von Umluft aus dem Luftschleier in den Arbeitsraum mit Sicherheit ausgeschaltet wird.

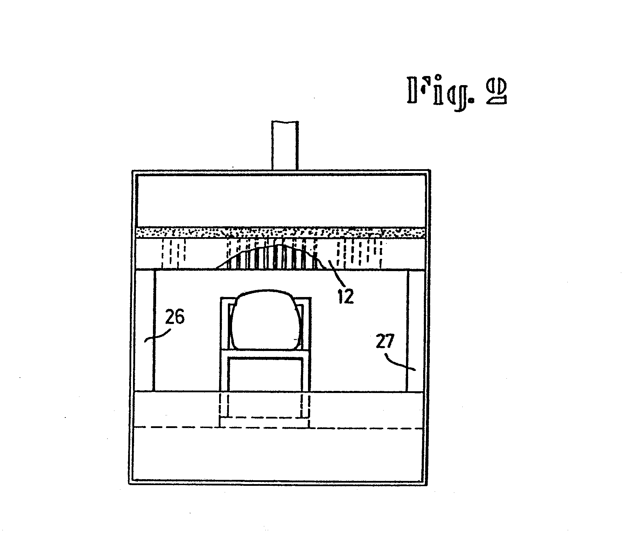

Aus der Darstellung in Fig. 2 ist erkennbar, daß im seitlichen Grenzbereich der Spritzkabine 1 zwei über die ganze Höhe der Spritzkabine, d.h. von der Decke bis zum Arbeitstisch reichende Abströmbleche 26 und 27 eingesetzt sind, die eine Rückprallwirkung der Gase aus dem Spritzraum 3 in den Arbeitsraum 2 verhindern und sicherstellen, daß der Arbeitsraum 2 von Lösungsmitteln freigehalten wird. Insbesondere durch den Druck über das Arbeitswerkzeug, z.B. eine Spritzpistole 28, werden hier ggf. Rückströmungen durch diese Abströmbleche 26 und 27 vermieden.

In der Stirnwand des Arbeitstisches 4 zum Arbeitsraum 2 hin können zusätzliche Luftansaugöffnungen vorgesehen sein, die unmittelbar Frischluft aus dem Arbeitsraum 3 ansaugen.

In der Zeichnung sind als weiße Pfeile die Wege der Frischluft eingezeichnet, als schwarze Pfeile die stark mit Lösungsmitteln angereicherten Umluftwege. Hieraus ist ersichtlich, daß zwei Luftströmungen erzeugt werden:

Die erste Luftströmung ist die, die durch die Frischluftzuführungsleitung 7 im Arbeitsraum 2 erzielt wird, wobei diese Frischluft durch die Injektorwirkung des durch das Rechteckrohrsystem 12 erzeugten Luftschleiers mit angesaugt wird. Hierdurch wird sichergestellt, daß der im Arbeitsraum 2 befindliche Arbeiter stets in einer Frischluftströmung arbeitet.

Das zweite Zirkulationssystem wird durch die Umluftabführungsleitung 15 geschaffen, wobei hier die Abluftleitung 20 eingeschaltet ist, die nunmehr bei entsprechender hoher Aufpegelung der Abgase eine Abführung derselben zu einer Abgasreinigung ermöglicht. Der Luftschleier wird durch dieses Zirkulationssystem geschaffen und ist mit Lösungsmitteln gemischt.

Während in der Erläuterung des Ausführungsbeispieles und in der Zeichnung eine Spritzkabine beschrieben und dargestellt ist, ist es selbstverständlich auch möglich, die erfindungsgemäße Anordnung in Verbindung mit einem Spritzstand einzusetzen, d.h. einer Spritzanlage, die nicht allseitig durch Begrenzungswände umschlossen ist.

Anstelle des in der Spritzkabine oder auf dem Spritzstand befindlichen Arbeiters, kann natürlich auch ein Roboter eingesetzt werden, wobei dann der Vorteil der erfindungsgemäßen Verfahrensweise darin zu sehen ist, daß die konstruktive Ausführung, ins-besondere hinsichtlich des elektrischen Bereiches dieses Roboters, vereinfacht werden kann.

Vor der Außenkabine und in der Frischluftzuführungsleitung 7 ist vorzugsweise eine Außenluftbehandlungseinheit vorgesehen, die z.B. aus Filterelementen, Wärmetauschern und Ventilatoren besteht, so daß in dem Frischluftteil der Spritzkabine immer ein dem Arbeiter oder dem Roboter angepaßtes Klima herrscht.

- 1 -

**Patentansprüche:**

1. Verfahren zum Reinigen der Abluft einer manuell betriebenen Spritzkabine mit Zuführen von Frischluft und Absaugen von lösungsmittelhaltiger Abluft, wobei die Frischluft ständig einem Arbeitsraum (2) der Spritzkabine zugeführt wird, die Umluft aus einem Spritzraum (3) der Spritzkabine im Bodenbereich abgesaugt und in den Spritzraum (3) im Deckenbereich rezirkuliert wird und zwischen Arbeitsraum (2) und Spritzraum (3) ein von oben nach unten gerichteter Luftschleier erzeugt wird, der eine atmosphärische Trennung zwischen Arbeitsraum (2) und Spritzraum (3) schafft, wobei in den Rezirkulationsstrom feststoffabscheidende Filter eingeschaltet sind, dadurch gekennzeichnet, daß
   a) die Absaugung der Luft ausschließlich im Bereich des Arbeitsraumes (2) und im unteren Bereich des Luftschleiers erfolgt,
   b) der Luftschleier durch rezirkulierte Umluft erzeugt wird,
   c) die Umluft nach entsprechender Rezirkulierung und nach ausreichender Aufpegelung ihres Lösungsmittelgehaltes einer Abluftreinigung zugeführt wird.

2. Verfahren nach Anspruch 1, dadurch gekennzeichnet, daß der Luftschleier im Deckenbereich an der Grenze zwischen Spritzraum (3) und Arbeitsraum (2) durch düsenartige Luftauslässe (12) für die Umluft eingeführt wird, die ein Ansaugen von Frischluft aus dem Arbeitsraum (2) bewirken.

3. Verfahren nach Anspruch 1 und 2, dadurch gekennzeichnet, daß über eine Bypaßführung (19) ein Teil des Rezirkulationsstromes schleierartig unmittelbar die Begrenzungswände des Spritzraumes (3) bestreicht.

4. Verfahren nach Anspruch 1 bis 3, dadurch gekennzeichnet, daß über eine Bypaßführung (30) der Rezirkulationsstrom einer Spaltdüse (31) zugeführt wird, die im unteren Bereich des Luftschleiers im Arbeitsraumbereich angeordnet ist und einen den gebildeten Luftschleier nach unten und innen zum Spritzraum (3) beaufschlagenden Umluftstrom erzeugt.

5. Spritzkabine zur Durchführung manueller Spritzarbeiten mit lösungsmittelhaltigen Lacken mit einem Frischluftzuführungsgebläse (8) und einem Umluftabführungsgebläse (16), wobei die Spritzkabine in einen Arbeitsraum (2) und einen Spritzraum (3) unterteilt ist, die Frischluftzuführungsleitung (7) im Deckenbereich des Arbeitsraumes (2) mündet, die Umluftabführungsleitung (15) im Bodenbereich des Spritzraumes (3) anschließt und zum Deckenbereich des Spritzraumes zurückführt, an die Umluftleitung (15) eine Abgabeleitung (20) anschließt, im Grenzbereich zwischen Arbeitsraum (2) und Spritzraum (3) eine über die ganze Breite der Spritzkabine (1) reichender scharfstrahliger Luftschleier erzeugende Düsenanordnung (12) vorgesehen ist, die zu einer Klimatrennung zwischen Arbeitsraum (2) und Spritzraum (3) führt, dadurch gekennzeichnet, daß die Umluftab-

- 3 -

führungsleitung (15) über eine Zirkulationsleitung (10) die Düsen (12) mit Umluft
speist.

6. Vorrichtung nach Anspruch 5, <u>dadurch gekenn-
zeichnet</u>, daß in die Umluftabführungsleitung
(15) eine Bypaßleitung (19) anschließt, die
einen Umluftwandschleier im Bereich der Begrenzungswände, vorzugsweise im rückwärtigen
Bereich des Spritzraumes (3) erzeugt.

7. Vorrichtung nach Anspruch 5, wobei der
Spritzraum (3) mit einem gasdurchlässigen Arbeitstisch (4) ausgerüstet ist, unter dem die
Umluftabführungsleitung (15) anschließt, <u>da-
durch gekennzeichnet</u>, daß der gasdurchlässige
Arbeitstisch (4) an seiner zum Arbeitsraum
(2) hin gerichteten Seite gegenüber der übrigen Oberfläche des Arbeitstisches (4) hochgezogen ist (bei 14).

8. Vorrichtung nach Anspruch 5 bis 7, <u>dadurch
gekennzeichnet</u>, daß der Spritzraum (3) gegenüber dem Arbeitsraum (2) in den Seitenwandbereichen durch Abströmbleche (26, 27) abgegrenzt ist.

9. Vorrichtung nach einem oder mehreren der vorhergehenden Ansprüche 5 bis 8, <u>dadurch ge
kennzeichnet</u>, daß in der zum Arbeitsraum (2)
gerichteten Stirnwand des Arbeitstisches (4)
zusätzliche Luftansaugöffnungen vorgesehen
sind.

10. Vorrichtung nach einem oder mehreren der vor-

- 4 -

hergehenden Ansprüche 5 bis 9, <u>dadurch ge-
kennzeichnet</u>, daß insbesondere in die Umluftleitung (15) eine Meßeinrichtung (23) für
den Lösungsmittelgehalt eingeschaltet ist.

11. Vorrichtung wenigstens nach Anspruch 5, <u>ge-
kennzeichnet durch</u> eine über eine Bypaßleitung (30) an die Umluftleitung (15) angeschlossene Spaltdüse (31), die im unteren Bereich des Luftschleiers an der hochgezogenen
Kante (bei 14) des Arbeitstisches (4) angeordnet ist und einen vom Arbeitsraum (2) nach
unten und zur Spritzkabine (3) gerichteten
Düsenstrahl erzeugt.

Fig.1

0253980

Fig. 2

**EUROPÄISCHER RECHERCHENBERICHT**

Europäisches Patentamt

## EINSCHLÄGIGE DOKUMENTE

EP 87107129.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US - A - 4 237 780 (TRUHAN) <br> * Gesamt * <br><br> -- | 1,2,5 | B 01 D 53/34 <br> B 05 B 15/12 |
| D,A | DE - A1 - 3 314 590 (FLÄKT) <br> * Ansprüche; Fig. 1 * <br><br> -- | 1,5 | |
| A | US - A - 4 351 863 (ROESNER) <br> * Ansprüche; Fig. * <br><br> -- | 1,5 | |
| A | DE - A1 - 2 710 254 (GEBRÜDER WALTI AG) <br> * Ansprüche; Fig.; Seite 9, Zeile 7 - Seite 10, Zeile 13 * <br><br> -- | 1,5 | |
| D,A | DE - C - 649 266 (LEIPZIGER) <br> * Gesamt * <br><br> ---- | 1,5 | |

**RECHERCHIERTE SACHGEBIETE (Int. Cl.4)**

B 01 D
B 05 B
F 24 F
B 05 C
F 23 J

Der vorliegende Recherchenbericht wurde für alle Patentansprüche erstellt.

| Recherchenort | Abschlußdatum der Recherche | Prüfer |
|---|---|---|
| WIEN | 14-10-1987 | BECKER |